# EUROPEAN PATENT SPECIFICATION

(11) **EP 4 662 633 B1**
(45) Date of publication and mention of the grant of the patent: **14.10.2026**
(21) Application number: 24713890.2
(22) Date of filing: 11.03.2024
(51) Int. Cl.: G06T 5/94, G06T 5/20, G06T 5/60

(54) **SEMANTIC IMAGE ADJUSTMENTS**
SEMANTISCHE BILDANPASSUNGEN
AJUSTEMENTS D'IMAGE SÉMANTIQUE

(43) Date of publication of application: 17.12.2025
(73) Proprietor: Google LLC, Mountain View, CA 94043 (US)
(72) Inventor: SHIAU, Zu-Yun, Mountain View, California 94043 (US); LIN, Liang-Chun, Mountain View, California 94043 (US); NISHIMURA, Jun, Mountain View, California 94043 (US); CHIU, HsienTzu, Mountain View, California 94043 (US)
(74) Representative: Marks & Clerk GST
(86) International application number: PCT/US2024/019397
(87) International publication number: WO 2025/193220

(56) References cited:
- US-A1- 2006 050 957
- US-A1- 2015 325 023
- WANG TAO ET AL: "Real-time Image Enhancer via Learnable Spatial-aware 3D Lookup Tables", 2021 IEEE/CVF INTERNATIONAL CONFERENCE ON COMPUTER VISION (ICCV), IEEE, 10 October 2021 (2021-10-10), pages 2451 - 2460, XP034093220, DOI: 10.1109/ICCV48922.2021.00247

## Description

### BACKGROUND

Image adjustments can be used to improve the quality of images taken, e.g., by a camera of a smartphone or other mobile device. Raw data from image sensors of such cameras can appear unnatural or have other artifacts. Adjusting images to, e.g., remove or reduce the presence of such artifacts in the captured image, can include adjusting values corresponding to pixels or groups of pixels of the captured image. The values can include red, green, and blue values or hue, saturation, and lightness values, among others.

US2006/050957 A1 discloses a method in which a membership image is produced through a multi-stage process that contemplates a first punctual classification stage generating a rough membership image, followed by a low-pass filtering of regionalization of the image through a down-sampling of the image followed by an up-sampling of the image, and in a further step of merging the regions that overcomes the superposition effects induced by the low-pass filtering operation. The so generated membership image contains semantic information of the input image that may be used for effectively implementing an adaptive correction/improvement of the color of the input image. For an adaptive correction/improvement of the color, the encoded data of the generated membership image is fed in parallel to the data of the real image to an adaptive modification block of the color of the image pixels.

Real-time Image Enhancer via Learnable Spatial-aware 3D Lookup Tables by Wang et al. discloses a novel real-time image enhancer via learnable spatial-aware 3-dimentional lookup tables (3D LUTs), which well considers global scenario and local spatial information. Specifically, there is disclosed a light weight two-head weight predictor that has two outputs. One is a 1D weight vector used for image-level scenario adaptation, the other is a 3D weight map aimed for pixel-wise category fusion. The spatial-aware 3D LUTs are learned and fused according to the aforementioned weights in an end-to-end manner. The fused LUT is then used to transform the source image into the target tone.

US2015/325023 A1 discloses method for providing pre-edits to photos. In some implementations, a method includes detecting one or more objects in a photo. The method further includes classifying the one or more objects. The method further includes selecting one or more parameter values for one or more respective filters based on the classifying of the one or more objects

### SUMMARY

This specification describes technologies for adjusting images using semantic classes or regions or items. These technologies generally involve computing image adjustments for pixels of an input image based on comparing values of the pixels with values corresponding to image classes where each image class has associated image adjustments and can be associated with a semantic class of item or region. The semantic adjustments can be used with a Color Look-up Table (CLUT). The techniques can improve efficiency of applying image adjustments for one or more regions or items compared to using a separate CLUT for each semantic class.

In general, one innovative aspect of the subject matter described in this specification can be embodied in methods that include the actions of generating, using a trained segmentation model and an input image, a mask indicating regions of the input image; comparing (i) first pixels corresponding to the input image and (ii) second pixels of an image class of one or more image classes; determining, using (i) the comparison and (ii) adjustments corresponding to the image class of the one or more image classes, color adjustments for the first pixels corresponding to the input image; and generating, using (i) the mask indicating regions of the input image and (ii) the color adjustments for the first pixels, an output image. Other embodiments of this aspect include corresponding computer systems, apparatus, and computer programs recorded on one or more computer storage devices, each configured to perform the actions of the methods.

The invention is defined by the appended claims.

The technology described in this specification can be implemented so as to realize one or more of the following technical advantages. For example, techniques can reduce the required hardware and increase efficiency of processing by, e.g., reducing a number of CLUTs for image adjustment based on multiple semantic classes of items or regions. In one example improvement, described in more detail in this document, the techniques described can reduce chip area requirements and memory requirements compared to using separate CLUTs for separate semantic classes. For example, applying image adjustments for 6 semantic classes can require 6 separate CLUTs. Each separate CLUT requires additional chip area and memory resources (e.g., each CLUT can use 324,16 bits and a chip area of 9,712.570 micrometers squared). Operating 6 separate CLUTs can use 58,275.42 micrometers squared chip area and 1,944,096 bits. To reduce the required memory usage and chip area requirements, the techniques described can use a single CLUT with additional semantic-based adjustments, as described in this document. This can reduce required chip area (e.g., to 9,712.57 micrometers squared chip area) and memory (e.g., to 324,664 bits), resulting in a significant savings (e.g., savings of 1,619,432 bits and 48562.85 micrometers squared chip area for the example case of 6 semantic classes where the techniques described can provide increasing benefits in area and memory proportional to the number of classes used). In particular, by performing operations of one or more of a segmentation mask engine, adjustment engine, or a saturation engine (described in this document), techniques can eliminate the need for multiple CLUTs for applying semantic-based adjustment of images over multiple semantic classes-e.g., sunset semantic class, face semantic class, person semantic class, food semantic class, among others. In some cases, techniques described can reduce memory storage by storing a single CLUT and specific adjustments for one or more classes instead of separate CLUTs for each class, where a CLUT requires more memory than specific adjustments.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example image system.
FIG. 2 shows an example image adjusting process.
FIG. 3 shows an example image adjusting system.
FIG. 4 is a flowchart of an example process.
FIG. 5 is a diagram illustrating an example of a computing system used for semantic image adjustments.

Like reference numbers and designations in the various drawings indicate like elements.

### DETAILED DESCRIPTION

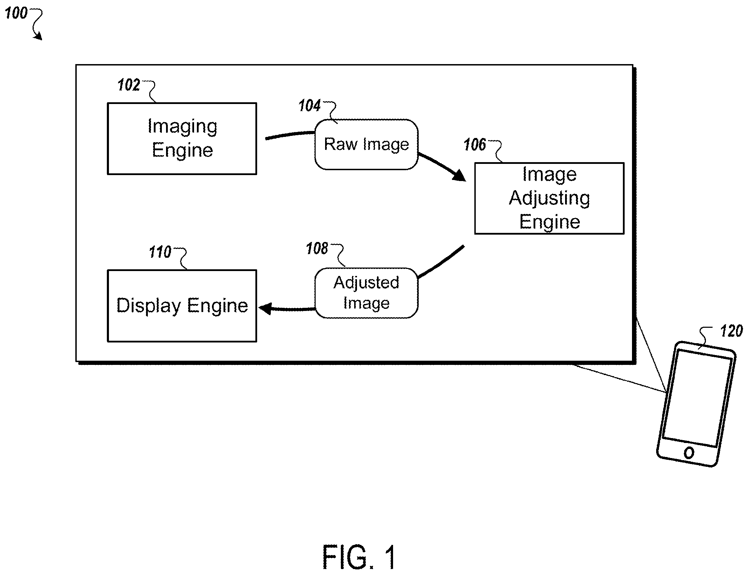

FIG. 1 shows an example image system 100. The system 100 includes an imaging engine 102, an image adjusting engine 106, and a display engine 110. In some implementations, the system 100 includes a mobile device 120, such as a smartphone. For example, the imaging engine 102 can include a camera of a device, such as a mobile device. Operations of the image adjusting engine 106 can be performed by one or more processors of the mobile device 120 or processors of a server or other processor. The display engine 110 can include a screen of a device, such as the mobile device 120.

In general, the image system 100 can adjust an image to adjust, correct, or improve colors within an image-e.g., to make images look more life-like or appealing. In particular, the imaging engine 102 generates a raw image 104. For example, the imaging engine 102 can include at least one or more of: a camera, lens, image sensor, or other elements. The raw image 104 can include one or more values indicating values of pixels of the raw image. The imaging engine 102 provides the raw image 104 to the image adjusting engine 106. For example, the image adjusting engine 106 can perform image adjusting techniques described in this document. The image adjusting engine 106 can include processes of an image signal processor configured to process data from the imaging engine 102. The image adjusting engine 106 can include processes of a display processor-e.g., configured to obtain image data and adjust the data before displaying the data using one or more displays. The image data can be obtained from an image signal processor, application, decoder, among others. The image adjusting engine 106 generates an adjusted image 108. For example, the adjusted image 108 can be an adjusted version of the raw image 104 where adjustments can include color adjustments, e.g., adjustments to pixel values indicating color. The image adjusting engine 106 provides the adjusted image 108 to the display engine 110. For example, the image adjusting engine 106 can include one or more processors that can provide pixel values for display using the display engine 110. The display engine 110 can provide data to a screen for viewing the adjusted image 108. In some cases, the image adjusting engine 106 can provide the adjusted image 108 for one or more other actions-e.g., encoding or compression for streaming or transporting data of the adjusted image 108 to another device or to a memory storage.

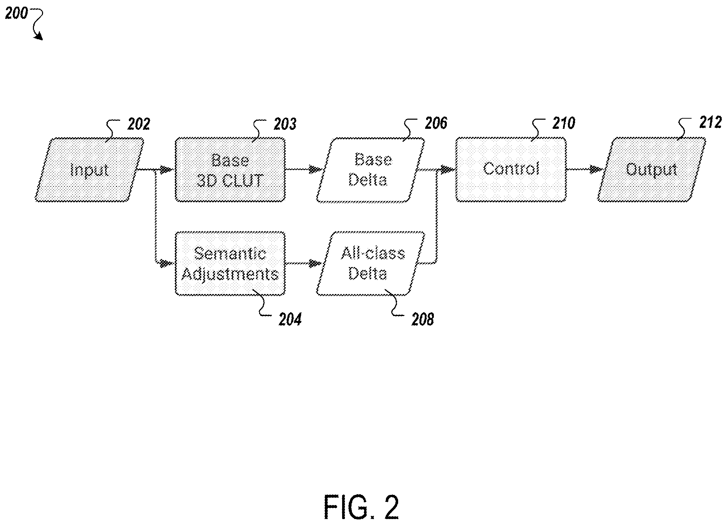

FIG. 2 shows an example image adjusting process 200. The process 200 shows an image adjustment in addition to base delta generation using a color look-up table with semantic adjustments. The process 200 can be performed by one or more computers, such as a mobile device. In some cases, the process 200 is performed by the system 100, e.g., the imaging adjusting engine 106. In some cases, the process 200 is performed in hardware. For example, display hardware can include one or more circuit elements configured to perform operations described in this document. The display hardware can be used to process or enhance images that are then shown on a display of the display hardware or are sent for storage or to another device.

In some implementations, the process 200 improves efficiency of applying image adjustments. For example, one implementation of using a Color Look-up Table (CLUT) to support adjustment for multiple classes would be to apply a separate CLUT for each class of item or region to be adjusted. In this way, different classes of item or region can be adjusted differently. However, each separate CLUT can be expensive for memory operations, such as static random-access memory (SRAM), which makes a per-class CLUT infeasible. For example, each separate CLUT can require 324,16 bits and a chip area of 9,712.570 micrometers squared. Techniques described can reduce memory usage and chip area usage for generating class specific adjustments to an image. Chip area usage can include internal memory and logic circuits in hardware to perform one or more operations. Techniques can include the process 200.

The process 200 includes obtaining input 202. For example, the input 202 can include image data from an imaging engine. The imaging engine can include a camera of a device, such as a smartphone. Data indicating an image captured by an imaging engine can be obtained from memory storage. For example, image data can be obtained from memory storage used for storing images captured by a camera. In some implementations, the input 202 includes pixel values of the image.

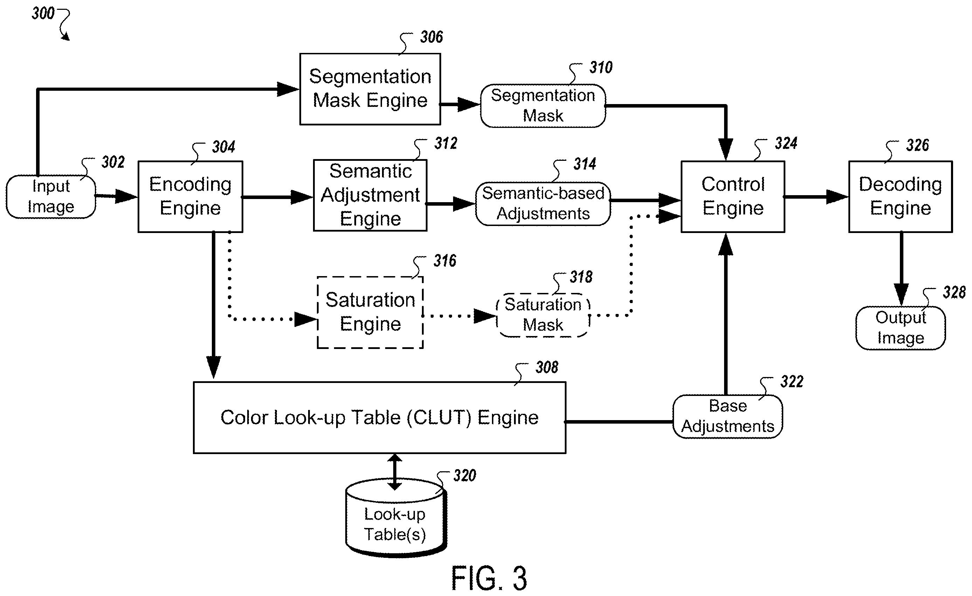

The process 200 includes generating base delta 206 and all-class delta 208 (e.g., where delta includes adjustments from an input value corresponding to a pixel) using the input 202. For example, a base 3D Color Look-up Table (CLUT) can be used to generate the base delta 206. Semantic adjustments 204 can be used to generate the all-class delta 208. In some cases, semantic adjustments 204 can be performed instead of including multiple CLUTs for specific classes of item or region, thereby reducing memory usage and chip area requirements. Additional details regarding these operations are provided further with reference to FIG. 3.

The process 200 includes combining the base delta 206 and the all-class delta 208 using a control 210-e.g., where the control 210 can include a control processing step (e.g., as implemented by a device processor) that obtains the base delta 206 and the all-class delta 208 and generates a set of adjustments for each pixel or group of pixels. For example, the base delta 206 and the all-class delta 208 can include adjustments to pixel values. The base delta 206 can include pixel value adjustments obtained from a single CLUT. The all-class delta 208 can include pixel value adjustments obtained from semantic adjustments 204. Additional details regarding these operations are provided further with reference to FIG. 3.

The process 200 includes generating output 212 using output from the control 210. For example, the process 200 can include generating an adjusted image, such as the adjusted image 108. The adjusted image 108 can include one or more pixel values that have been adjusted per the above described operations (as further described with reference to FIG. 3) and configured to be displayed on a screen.

FIG. 3 shows an example image adjusting system 300. The system 300 includes an encoding engine 304, a segmentation mask engine 306, a color look-up table (CLUT) engine 308, an semantic adjustment engine 312, a control engine 324, and a decoding engine 326. In some implementations, the system 300 includes a saturation engine 316.

Processing described in reference to the system 300 can be performed on values indicating the input image 302 or values indicating an encoded version of the input image 302. Both the encoding engine 304 and decoding engine 326 can be optionally included for, e.g., transforming data of pixels for processing and output, respectively. For example, the input image 302 can include values indicating red, green, and blue (RGB) values of an image. In some cases, an encoded version of the input image 302-e.g., generated by the encoding engine 304-can include values indicating hue, saturation, and lightness (HSL) of the image.

In some implementations, the system 300 performs the process 200. For example, the CLUT engine 308 can generate the base delta 206 using the base 3D CLUT 203. The segmentation mask engine 306 and the semantic adjustment engine 312 can generate the all-class delta 208. In some cases, the saturation engine 316 can be used to generate the all-class delta 208, e.g., in combination with one or more of the segmentation mask engine 306 or the semantic adjustment engine 312. In some implementations, the CLUT engine 308 performs one or more processes corresponding to a LUT index or weight calculation, trilinear interpolation, or control processes to generate the base adjustments 322.

The encoding engine 304 encodes the input image 302. For example, the encoding engine 304 can convert the input image 302 from a first type of data to a second type of data. In some cases, the encoding engine 304 converts values of the input image 302 indicating amounts of red, green, and blue to values indicating hue, saturation, and lightness. In some cases, the encoding engine 304 is not used. For example, processing can be performed using the input image 302 without encoding.

The segmentation mask engine 306 generates a segmentation mask 310. In some cases, the segmentation mask engine 306 uses the input image 302 without prior encoding, e.g., by the encoding engine 304. In some cases, the segmentation mask engine 306 uses output from the encoding engine 304. A segmentation mask can be generated for an image in RGB or where encoded in HSL.

In some implementations, the segmentation mask engine 306 indicates regions of the input image 302. For example, the segmentation mask engine 306 can generate a segmentation mask that indicates regions of the input image 302 in which to adjust one or more pixel values. In some cases, the segmentation mask engine 306 is trained using one or more machine learning model training methods. The segmentation mask engine 306 can be trained to identify one or more regions of images-e.g., regions corresponding to humans, sky, trees, cars, human faces, among others. In some cases, the generated segmentation mask 310 includes a soft mask in a range-e.g., 0 to 1. In some cases, training can include obtaining training data that includes a set of images and data indicating identified regions of those images. One or more machine learning models can be trained to predict the identified regions. A training system, such as the system 300, can compare a predicted output of identified regions to the data indicating the identified regions. Based on the comparison, the training system can adjust one or more weights or parameters of the one or more machine learning models such that subsequent output of the one or more machine learning models more closely matches the identified regions of the training data. The one or more machine learning models can be included in the segmentation mask engine 306 to identified one or more regions corresponding to the input image 302. The one or more machine learning models can include DeepLabv3+, MobileNet, among others.

The CLUT engine 308 is used to generate base adjustments 322. In some implementations, the CLUT engine 308 uses one or more look-up tables 320, e.g., stored in computer memory. For example, the CLUT engine 308 can use a look-up table of pre-generated function values. The CLUT engine 308 can look-up function outputs, e.g., instead of recomputing functions. In some cases, looking up values in a table stored in memory, such as the look-up tables 320, can improve efficiency by save processing steps compared to re-processing functions.

In some implementations, a look-up table of the one or more look-up tables 320 include entries specifying pixel value adjustments for one or more specific pixel values. For example, the CLUT engine 308 can process the input image 302 or encoded version of the input image 302 generated by the encoding engine 304. In processing, the CLUT engine 308 can compare pixel values corresponding to the input image 302 to entries of the look-up tables 320. The CLUT engine 308 can determine if pixel values corresponding to the input image 302 satisfy a matching threshold compared to entries of the look-up tables 320. For example, values indicating a pixel can be 40, 80, 255 and an entry value of a look-up table can be 41, 79, 254. Such values can satisfy a matching threshold in some implementations. Other values indicating pixels can be used in some cases. In response to determining the pixel corresponding to values 40, 80, 255 matches the entry with values 41, 79, 254, the CLUT engine 308 can obtain an adjustment stored in the entry of the look-up table. For example, the adjustment can be 0, 2, 22. The base adjustment 322 can then include the adjustment 0, 2, 22 as a base adjustment for the pixel corresponding to values 40, 80, 255.

In response to pixel values corresponding to the input image 302 satisfying a threshold-e.g., matching, within a matching threshold, to one or more entries of the look-up tables 320-the CLUT engine 308 can generate elements of the base adjustments 322. For example, the CLUT engine 308 can use values corresponding to entries of the look-up tables 320 as values of the base adjustments 322.

The semantic adjustment engine 312 generates semantic-based adjustments 314. The semantic adjustment engine 312 can use the input image 302 or an encoded version of the input image 302 generated by the encoding engine 304. In some implementations, the semantic adjustment engine 312 uses input data with pixel values represented by red, green, and blue values. In some implementations, the semantic adjustment engine 312 uses input data with pixel values represented by hue, saturation, and lightness values.

In some implementations, the semantic adjustment engine 312 computes color adjustments for one or more image classes. For example, there can be a set of K image classes. The K image classes can include sets for a sky class, e.g., a daylight blue sky or sunset orange sky, among others. The K image classes can include sets for skin class, e.g., one for light skin color or one for dark skin color, among others. The K image classes can include sets for one or more classes-e.g., classes for one or more different types of sky and classes for one or more different types of skin. An image class can include one or more parameters. For example, the one or more parameters can include one or more of the following: (i) a set of representative values, (ii) a matching similarity, (iii) a weighting, and (iv) a value shifting. The set of representative values can be a set of values corresponding to pixel values-e.g., in red, green, and blue or hue, saturation, and lightness. The matching similarity can include an inverse sigma. The matching similarity can adjust how similar pixel values corresponding to the input image 302 and representative values of a given image class need to be in order for adjustments corresponding to the given image class to be used for the given pixel of the input image 302. The weighting can include a vector indicating an importance for each value used to represent a pixel, e.g., corresponding to the input image 302. Where pixel values are represented using three values, such as red, green, and blue (RGB), or hue, saturation, and lightness (HSL), the weighting can include a three dimensional vector that represents an importance of each parameter. The value shifting can include a vector representing adjustments to values indicating pixels, e.g., red, green, and blue, or hue, saturation, and lightness.

The semantic adjustment engine 312 can process pixel values corresponding to the input image 302-e.g., included in the input image 302 or included in an encoded version of the input image 302 generated by the encoding engine 304. The semantic adjustment engine 312 can compare values representing pixels corresponding to the input image 302 to representative values of one or more image classes.

In some implementations, the semantic adjustment engine 312 computes a similarity, from a given pixel value corresponding to the input image 302, to each representative value of each image class-e.g., where a representative value for each image class can include values corresponding to a representative pixel. For example, the semantic adjustment engine 312 can use one or more weighting values and a matching similarity to determine a similarity. In some cases, weighting values are used as multipliers to adjust an absolute distance computed between the given pixel value and a given representative pixel value of each image class. In some cases, a matching similarity includes a sigma value and computing a similarity includes multiplying a value representing distance and the sigma value to compute the result of an exponential function.

In general, a goal of the semantic adjustment engine 312 can be to apply shifts, corresponding to one or more image classes, to one or more pixels corresponding to the input image 302. In some cases, the shifts can be applied in proportion to a similarity value generated by the semantic adjustment engine 312. For example, one or more similarity values computed for a blue colored pixel indicates more similarity to a blue sky image class than a sunset image class. Using the computed similarity values, the semantic adjustment engine 312 can adjust the blue colored pixel using more of the adjustments stored with the blue sky image class compared with adjustments stored with the sunset image class.

The semantic adjustment engine 312 can include values indicating adjustments based on pixel values, for one or more pixel values corresponding to the input image 302, in the semantic-based adjustments 314. The semantic adjustment engine 312 can provide the semantic-based adjustments 314 to the control engine 324 to be combined with one or more adjustments or masks.

Example pseudocode that can be performed by the semantic adjustment engine 312 is shown below with respect to an encoded image (with values of hue, saturation, and lightness):

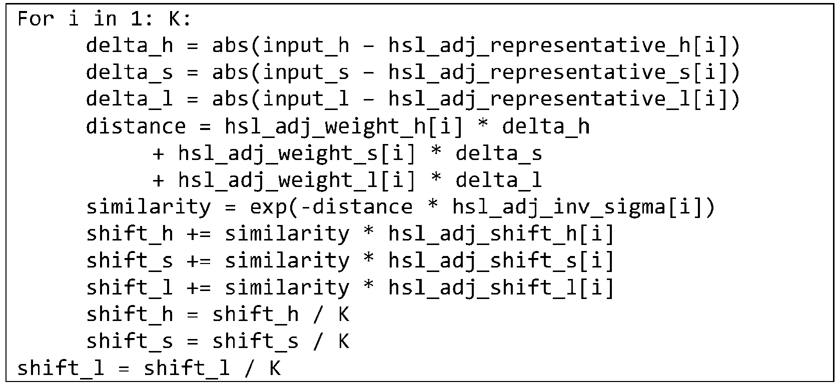

In some implementations, the semantic adjustment engine 312 normalizes adjustments for a given pixel. For example, for a value corresponding to a pixel of the input image 302, the semantic adjustment engine 312 can generate adjustments values corresponding to each image class. The semantic adjustment engine 312 can generate a total adjustment for the value by normalizing the sum total adjustment by the number of image classes. For example, for K image classes, the sum total adjustments can be normalized by K through division of the sum adjustments by K. Normalizing can help ensure that a sum of adjustments to values, e.g., of a pixel, do not increase the corresponding values above a threshold level but, instead, adjust them in proportion to adjustments specified for a single image class. Not normalizing can cause over saturation with RGB values and a type of inflation of values in HSL which can decrease the lifelike-ness of an image or introduce artifacts such as white spots-e.g., areas that are similar to multiple semantic classes and thus have multiple semantic class adjustments applied which can result in values corresponding to pixels increasing to maximum values.

The saturation engine 316 generates a saturation mask, in some cases. For example, the saturation engine 316 can optionally be used to generate a mask that is used by the control engine 324 to control what pixels are adjusted according to generated adjustment values. In some cases, the saturation engine 316 can generate a mask to avoid adjusting pixels that indicate extreme saturation levels, e.g., extreme low or extreme high saturation. Avoiding adjusting extreme saturated pixels can prevent unwanted changes-e.g., due to unstable hue values for extreme saturation levels.

In some implementations, the saturation engine 316 obtains values corresponding to pixels of the input image 302. The values can indicate red, green, and blue (RGB), or hue, saturation, and lightness (HSL). In some implementations, the saturation engine 316 normalizes the obtained values. For example, the saturation engine 316 can normalize the values corresponding to pixels of the input image 302 to values within a range, such as 0 to 1. Such a range can help reduce memory allocation of bits to store the values or can allow use of exponential functions where 1 is a natural maximum.

In some implementations, the saturation engine 316 computes a function for each of the values corresponding to pixels of the input image 302. For example, the saturation engine 316 can compute a scaled exponential function to make computed values larger. The saturation engine 316 can compute values for each pixel to within a range, such as 0 to 1. The saturation engine 316 can compute a scaled exponential function to make the computed values in the range larger. A scaled exponential function can be, for example, -*e*^{-4*s*} + 1 where 4 is a scale that can be adjusted and *s* is a value indicating saturation level. By using a function to make values in a range larger, the saturation engine 316 can improve the saturation mask by helping to avoid masking out pixels with saturation values in the middle of a value range-e.g., 0.3 to 0.8.

In some implementations, the saturation mask 318 includes a set of values indicating a mask value for one or more pixels corresponding to the input image 302. For example, the values can be in a range, such as 0 to 1. The values can be the output of a function, such as a scaled exponential function. The values can be used by the control engine 324 to determine whether to adjust a value of a pixel corresponding to the input image 302 and, if determining to adjust a value, how much to adjust the value. For example, a value of 0 can indicate no adjustments are to be applied by the control engine 324. A value more than 0 but less than 1 can include applying a proportional amount of adjustment-e.g., a proportion of adjustments generated by the CLUT engine 308 or the semantic adjustment engine 312. A value of 1 can include applying full adjustments generated by the system 300, e.g., by the CLUT engine 308 or the semantic adjustment engine 312.

The control engine 324 combines data generated by the system 300 to generate the output image 328. In some implementations, the control engine 324 generates an image in a first format and provides the image in the first format to the decoding engine 326. The image in the first format can include an image where pixels are represented by hue, saturation, and lightness values. The decoding engine 326 can transform values represented in a first format to values represented in a second format. In some cases, the decoding engine 326 can be used in cases where the encoding engine 304 is used-e.g., to reformat the image used for processing back to an original format of the input image 302 to be used for storage or viewing, among other actions.

In some implementations, the control engine 324 uses one or more of the segmentation mask 310, semantic-based adjustments 314, the saturation mask 318, or the base adjustments 322 to generate data for the output image 328. For example, the control engine 324 can compute values using the segmentation mask 310, saturation mask 318, and semantic-based adjustments 314. The control engine 324 can compute values using multiplication of sets of values corresponding to pixels, e.g., the control engine 324 can compute *output = enhanced_input + segmentation_mask · saturation_mask* · *semantic_adjustments.* The enhanced input can be generated by the control engine 324 using the base adjustments 322 from the CLUT 308. The symbol · can represent per pixel multiplication-e.g., where a first value in a first variable corresponding to a first pixel is multiplied only by the values in the other variables corresponding to the first pixel, where the first pixel corresponds to a pixel in the input image 302. for example, one example process for computation can be expressed as (only showing values corresponding to one pixel): $\begin{matrix}output = \left[{\left[H, S, L\right]}_{enhanced} … … … …\right] + \left[0.1 … … … …\right] ⋅ \left[0.5 … … … …\right] \\ ⋅ \left[{\left[H, S, L\right]}_{adjust} … … … …\right]\end{matrix}$

In this example process, matrices are used for each of segmentation_mask, saturation_mask, and semantic_adjustments. The output for a pixel represented by the top left corner of the matrices can be the *[H, S, L*]_{*enhanced* (*E*)} values adjusted by *[H, S, L*]_{*adjust* (*a*)} scaled by the segmentation_mask and the saturation_mask, e.g., 0.1 and 0.5. The result can be *H_{E}* + 0.05*Hₐ, S_{E}* + 0.05*Sₐ, L_{E}* + 0.05*Lₐ.*

The control engine 324 can multiply by the segmentation mask 310 to control how much to apply a computed adjustment to a given pixel. If a pixel is more similar to specific items or regions detected by the segmentation mask engine 306, the mask value for the pixel in the segmentation mask 310 can be larger and therefore produce a larger adjustment when multiplied with other variables, as described. In some cases, different computations by the control engine 324 can allow low mask values to achieve the same effect as larger values.

The control engine 324 can multiply by the saturation mask 318 to control how much to apply a computed adjustment to pixels with extreme saturation levels, e.g., low saturation. The saturation engine 316 can compute smaller saturation mask values for pixels with low saturation. Using these lower values, the control engine 324 can generate less adjustments for pixels with low saturation. Similar techniques can be used to avoid high saturation values are to use high saturation mask values to reduce the amount of adjustment applied to low saturation pixels-e.g., by suitable adjustment to computations performed by the control engine 324.

The decoding engine 326 can generate the output image 328. In some cases, the decoding engine 326 converts from one image format to another image format. For example, the decoding engine 326 can convert, e.g., (i) from hue, saturation, and lightness values to red, green, and blue values or (ii) from red, green, and blue values to hue, saturation, and lightness values.

Improved efficiency can be shown by the following example calculations. A required size of a single CLUT can be 324,16 bits. If six semantic classes are used, a per-class CLUT system would require 324,16 * 6 = 1,944,096 bits (6 LUTs). Using techniques described in this document, the 6 CLUTs can be replaced with 6 image classes, specifying image adjustments for particular types of pixels, and a single CLUT. In the case where each image class is defined by 4 parameters and pixel values for processing indicate hue (H), saturation (S), and lightness (L), memory usage breakdown can be as follows: (i) representative parameter = 13 bits (H) + 11 bits (S) + 11 bits (L) = 35 bits; (ii) matching similarity parameter = 11 bits; (iii) weight parameter = 8 bits (H) + 8 bits (S) + 8 bits (L) = 24 bits: (iv) shift parameter = 14 bits (H) + 12 bits (S) + 12 bits (L) = 38 bits. By using techniques described in this example case. the bits required for processing is 324,16 (single CLUT) + (35 + 11 + 24 + 38) * 6 = 324,664 bits (around 1.002 LUTs). 324,664 bits is less than 1,944,096 bits which would be used for 6 individual CLUTs thereby improving computational efficiency and required hardware usage for the processes described. The increase in efficiency increases for as the number of semantic classes increases-e.g., which can be the case for more advanced image adjustments where more specific adjustments for specific items or regions of an image are specified. Using more semantic classes can improve the resulting output image generated by a camera.

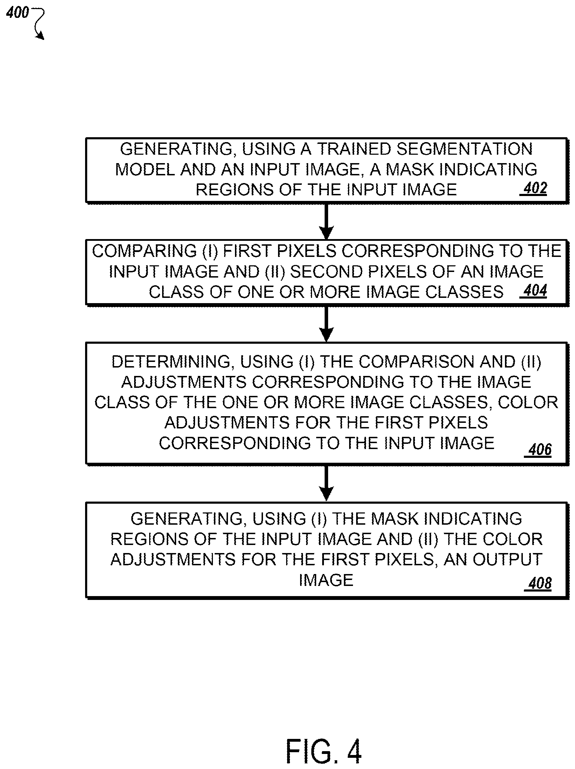

FIG. 4 is a flowchart of an example process 400. For convenience, the process 400 will be described as being performed by a system of one or more computers, located in one or more locations, and programmed appropriately in accordance with this specification. For example, the system 300 of FIG. 3 or the system 100 of FIG. 1, appropriately programmed, can perform the process 400.

The process 400 includes generating, using a trained segmentation model and an input image, a mask indicating regions of the input image (402). For example, the segmentation mask engine 306 described in reference to FIG. 3 can generate the segmentation mask 310.

The process 400 includes comparing (i) first pixels corresponding to the input image and (ii) second pixels of an image class of one or more image classes (404). For example, the semantic adjustment engine 312 can generate one or more similarity values using one or more comparisons between first and second pixels. The second pixels can be representative pixels stored corresponding to an image class, such as a sky image class, face image class, among others.

The process 400 includes determining, using (i) the comparison and (ii) adjustments corresponding to the image class of the one or more image classes, color adjustments for the first pixels corresponding to the input image (406). Fe, the semantic adjustment engine 312 can determine pixel values with a similarity value compared to a first image class satisfy a threshold similarity. The semantic adjustment engine 312 can determine adjustments for the pixel values to correspond with adjustments stored for the first image class. In some cases, the image adjustments are applied in proportion to a similarity value for one or more image classes and corresponding representative pixel values. In some cases, multiple adjustment values can be combined and normalized to generate a set of adjustments for one or more pixels.

The process 400 includes generating, using (i) the mask indicating regions of the input image and (ii) the color adjustments for the first pixels, an output image (408). Fe, the control engine 324 can generate data for the output image 328 by combining data generated by the system 300. The data generated by the system 300 can include one or more of: the base adjustments 322, the segmentation mask 310, the semantic-based adjustments 314, and the saturation mask 318.

The order of operations in the process 400 described above is illustrative only, and can be performed in different orders in some cases. In some implementations, the process 400 can include additional operations, fewer operations, or some of the operations can be divided into multiple operations.

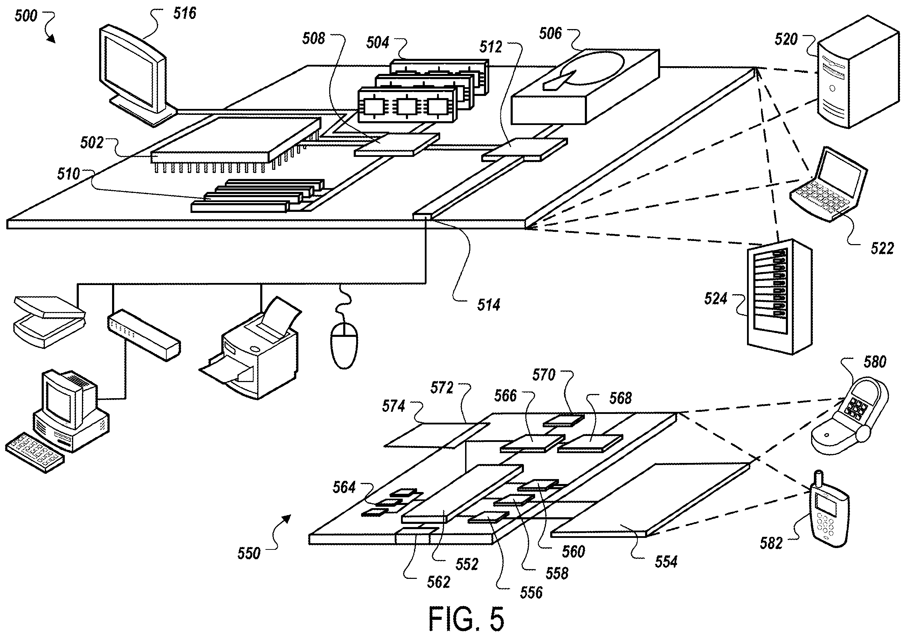

FIG. 5 is a diagram illustrating an example of a computing system used for semantic image adjustments. The computing system includes computing device 500 and a mobile computing device 550 that can be used to implement the techniques described herein. For example, one or more components of the system 100 or 300 could be an example of the computing device 500 or the mobile computing device 550.

The computing device 500 is intended to represent various forms of digital computers, such as laptops, desktops, workstations, personal digital assistants, servers, blade servers, mainframes, and other appropriate computers. The mobile computing device 550 is intended to represent various forms of mobile devices, such as personal digital assistants, cellular telephones, smart-phones, mobile embedded radio systems, radio diagnostic computing devices, and other similar computing devices. The components shown here, their connections and relationships, and their functions, are meant to be examples only, and are not meant to be limiting.

The computing device 500 includes a processor 502, a memory 504, a storage device 506, a high-speed interface 508 connecting to the memory 504 and multiple high-speed expansion ports 510, and a low-speed interface 512 connecting to a low-speed expansion port 514 and the storage device 506. Each of the processor 502, the memory 504, the storage device 506, the high-speed interface 508, the high-speed expansion ports 510, and the low-speed interface 512, are interconnected using various busses, and may be mounted on a common motherboard or in other manners as appropriate. The processor 502 can process instructions for execution within the computing device 500, including instructions stored in the memory 504 or on the storage device 506 to display graphical information for a GUI on an external input/output device, such as a display 516 coupled to the high-speed interface 508. In other implementations, multiple processors and/or multiple buses may be used, as appropriate, along with multiple memories and types of memory. In addition, multiple computing devices may be connected, with each device providing portions of the operations (e.g., as a server bank, a group of blade servers, or a multi-processor system). In some implementations, the processor 502 is a single threaded processor. In some implementations, the processor 502 is a multi-threaded processor. In some implementations, the processor 502 is a quantum computer.

The memory 504 stores information within the computing device 500. In some implementations, the memory 504 is a volatile memory unit or units. In some implementations, the memory 504 is a non-volatile memory unit or units. The memory 504 may also be another form of computer-readable medium, such as a magnetic or optical disk.

The storage device 506 is capable of providing mass storage for the computing device 500. In some implementations, the storage device 506 may be or include a computer-readable medium, such as a floppy disk device, a hard disk device, an optical disk device, or a tape device, a flash memory or other similar solid-state memory device, or an array of devices, including devices in a storage area network or other configurations. Instructions can be stored in an information carrier. The instructions, when executed by one or more processing devices (for example, processor 502), perform one or more methods, such as those described above. The instructions can also be stored by one or more storage devices such as computer- or machine readable mediums (for example, the memory 504, the storage device 506, or memory on the processor 502). The high-speed interface 508 manages bandwidth-intensive operations for the computing device 500, while the low-speed interface 512 manages lower bandwidth-intensive operations. Such allocation of functions is an example only. In some implementations, the high-speed interface 508 is coupled to the memory 504, the display 516 (e.g., through a graphics processor or accelerator), and to the high-speed expansion ports 510, which may accept various expansion cards (not shown). In the implementation, the low-speed interface 512 is coupled to the storage device 506 and the low-speed expansion port 514. The low-speed expansion port 514, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through anetwork adapter.

The computing device 500 may be implemented in a number of different forms, as shown in the figure. For example, it may be implemented as a standard server 520, or multiple times in a group of such servers. In addition, it may be implemented in a personal computer such as a laptop computer 522. It may also be implemented as part of a rack server system 524. Alternatively, components from the computing device 500 may be combined with other components in a mobile device, such as a mobile computing device 550. Each of such devices may include one or more of the computing device 500 and the mobile computing device 550, and an entire system may be made up of multiple computing devices communicating with each other.

The mobile computing device 550 includes a processor 552, a memory 564, an input/output device such as a display 554, a communication interface 566, and a transceiver 568, among other components. The mobile computing device 550 may also be provided with a storage device, such as a micro-drive or other device, to provide additional storage. Each of the processor 552, the memory 564, the display 554, the communication interface 566, and the transceiver 568, are interconnected using various buses, and several of the components may be mounted on a common motherboard or in other manners as appropriate.

The processor 552 can execute instructions within the mobile computing device 550, including instructions stored in the memory 564. The processor 552 may be implemented as a chipset of chips that include separate and multiple analog and digital processors. The processor 552 may provide, for example, for coordination of the other components of the mobile computing device 550, such as control of user interfaces, applications run by the mobile computing device 550, and wireless communication by the mobile computing device 550.

The processor 552 may communicate with a user through a control interface 558 and a display interface 556 coupled to the display 554. The display 554 may be, for example, a TFT (Thin-Film-Transistor Liquid Crystal Display) display or an OLED (Organic Light Emitting Diode) display, or other appropriate display technology. The display interface 556 may include appropriate circuitry for driving the display 554 to present graphical and other information to a user. The control interface 558 may receive commands from a user and convert them for submission to the processor 552. In addition, an external interface 562 may provide communication with the processor 552, so as to enable near area communication of the mobile computing device 550 with other devices. The external interface 562 may provide, for example, for wired communication in some implementations, or for wireless communication in other implementations, and multiple interfaces may also be used.

The memory 564 stores information within the mobile computing device 550. The memory 564 can be implemented as one or more of a computer-readable medium or media, a volatile memory unit or units, or a non-volatile memory unit or units. An expansion memory 574 may also be provided and connected to the mobile computing device 550 through an expansion interface 572, which may include, for example, a SIMM (Single In Line Memory Module) card interface. The expansion memory 574 may provide extra storage space for the mobile computing device 550, or may also store applications or other information for the mobile computing device 550. Specifically, the expansion memory 574 may include instructions to carry out or supplement the processes described above, and may include secure information also. Thus, for example, the expansion memory 574 may be provide as a security module for the mobile computing device 550, and may be programmed with instructions that permit secure use of the mobile computing device 550. In addition, secure applications may be provided via the SIMM cards, along with additional information, such as placing identifying information on the SIMM card in a non-hackable manner.

The memory may include, for example, flash memory and/or NVRAM memory (nonvolatile random access memory), as discussed below. In some implementations, instructions are stored in an information carrier such that the instructions, when executed by one or more processing devices (for example, processor 552), perform one or more methods, such as those described above. The instructions can also be stored by one or more storage devices, such as one or more computer- or machine-readable mediums (for example, the memory 564, the expansion memory 574, or memory on the processor 552). In some implementations, the instructions can be received in a propagated signal, for example, over the transceiver 568 or the external interface 562.

The mobile computing device 550 may communicate wirelessly through the communication interface 566, which may include digital signal processing circuitry in some cases. The communication interface 566 may provide for communications under various modes or protocols, such as GSM voice calls (Global System for Mobile communications), SMS (Short Message Service), EMS (Enhanced Messaging Service), or MMS messaging (Multimedia Messaging Service), CDMA (code division multiple access), TDMA (time division multiple access), PDC (Personal Digital Cellular), WCDMA (Wideband Code Division Multiple Access), CDMA2000, or GPRS (General Packet Radio Service), LTE, 5G/6G cellular, among others. Such communication may occur, for example, through the transceiver 568 using a radio frequency. In addition, short-range communication may occur, such as using a Bluetooth, Wi-Fi, or other such transceiver (not shown). In addition, a GPS (Global Positioning System) receiver module 570 may provide additional navigation- and location-related wireless data to the mobile computing device 550, which may be used as appropriate by applications running on the mobile computing device 550.

The mobile computing device 550 may also communicate audibly using an audio codec 560, which may receive spoken information from a user and convert it to usable digital information. The audio codec 560 may likewise generate audible sound for a user, such as through a speaker, e.g., in a handset of the mobile computing device 550. Such sound may include sound from voice telephone calls, may include recorded sound (e.g., voice messages, music files, among others) and may also include sound generated by applications operating on the mobile computing device 550.

The mobile computing device 550 may be implemented in a number of different forms, as shown in the figure. For example, it may be implemented as a cellular telephone 580. It may also be implemented as part of a smart-phone 582, personal digital assistant, or other similar mobile device.

In general, use of "or" can refer to "and/or." When providing a list of two or more items, the conjunction "or" can indicate any one of the items, any combination of a subset of the items, or all items in combination.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine: in other cases, multiple engines can be installed and running on the same computer or computers.

The subject matter and the actions and operations described in this specification can be implemented in digital electronic circuitry, in tangibly-embodied computer software or firmware, in computer hardware, including the structures disclosed in this specification and their structural equivalents, or in combinations of one or more of them. The subject matter and the actions and operations described in this specification can be implemented as or in one or more computer programs, e.g., one or more modules of computer program instructions, encoded on a computer program carrier, for execution by, or to control the operation of, data processing apparatus. The carrier can be a tangible non-transitory computer storage medium. Alternatively or in addition, the carrier can be an artificially-generated propagated signal, e.g., a machine-generated electrical, optical, or electromagnetic signal, that is generated to encode information for transmission to suitable receiver apparatus for execution by a data processing apparatus. The computer storage medium can be or be part of a machine-readable storage device, a machine-readable storage substrate, a random or serial access memory device, or a combination of one or more of them. A computer storage medium is not a propagated signal.

The term "data processing apparatus" encompasses all kinds of apparatus, devices, and machines for processing data, including by way of example a programmable processor, a computer, or multiple processors or computers. Data processing apparatus can include special-purpose logic circuitry, e.g., an FPGA (field programmable gate array), an ASIC (application-specific integrated circuit), or a GPU (graphics processing unit). The apparatus can also include, in addition to hardware, code that creates an execution environment for computer programs, e.g., code that constitutes processor firmware, a protocol stack, a database management system, an operating system, or a combination of one or more of them.

A computer program can be written in any form of programming language, including compiled or interpreted languages, or declarative or procedural languages; and it can be deployed in any form, including as a stand-alone program, e.g., as an app, or as a module, component, engine, subroutine, or other unit suitable for executing in a computing environment, which environment may include one or more computers interconnected by a data communication network in one or more locations.

A computer program may, but need not, correspond to a file in a file system. A computer program can be stored in a portion of a file that holds other programs or data, e.g., one or more scripts stored in a markup language document, in a single file dedicated to the program in question, or in multiple coordinated files, e.g., files that store one or more modules, sub-programs, or portions of code.

The processes and logic flows described in this specification can be performed by one or more computers executing one or more computer programs to perform operations by operating on input data and generating output. The processes and logic flows can also be performed by special-purpose logic circuitry, e.g., an FPGA, an ASIC, or a GPU, or by a combination of special-purpose logic circuitry and one or more programmed computers.

Computers suitable for the execution of a computer program can be based on general or special-purpose microprocessors or both, or any other kind of central processing unit. Generally, a central processing unit will receive instructions and data from a read-only memory or a random access memory or both. The essential elements of a computer are a central processing unit for executing instructions and one or more memory devices for storing instructions and data. The central processing unit and the memory can be supplemented by, or incorporated in, special-purpose logic circuitry.

Generally, a computer will also include, or be operatively coupled to, one or more mass storage devices, and be configured to receive data from or transfer data to the mass storage devices. The mass storage devices can be, for example, magnetic, magneto-optical, or optical disks, or solid state drives. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

To provide for interaction with a user, the subject matter described in this specification can be implemented on one or more computers having, or configured to communicate with, a display device, e.g., a LCD (liquid crystal display) monitor, or a virtual-reality (VR) or augmented-reality (AR) display, for displaying information to the user, and an input device by which the user can provide input to the computer, e.g., a keyboard and a pointing device, e.g., a mouse, a trackball or touchpad. Other kinds of devices can be used to provide for interaction with a user as well; for example, feedback and responses provided to the user can be any form of sensory feedback, e.g., visual, auditory, speech, or tactile feedback or responses; and input from the user can be received in any form, including acoustic, speech, tactile, or eye tracking input, including touch motion or gestures, or kinetic motion or gestures or orientation motion or gestures. In addition, a computer can interact with a user by sending documents to and receiving documents from a device that is used by the user; for example, by sending web pages to a web browser on a user's device in response to requests received from the web browser, or by interacting with an app running on a user device, e.g., a smartphone or electronic tablet. Also, a computer can interact with a user by sending text messages or other forms of message to a personal device, e.g., a smartphone that is running a messaging application, and receiving responsive messages from the user in return.

This specification uses the term "configured to" in connection with systems, apparatus, and computer program components. That a system of one or more computers is configured to perform particular operations or actions means that the system has installed on it software, firmware, hardware, or a combination of them that in operation cause the system to perform the operations or actions. That one or more computer programs is configured to perform particular operations or actions means that the one or more programs include instructions that, when executed by data processing apparatus, cause the apparatus to perform the operations or actions. That special-purpose logic circuitry is configured to perform particular operations or actions means that the circuitry has electronic logic that performs the operations or actions.

The subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some implementations, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of what is being claimed, which is defined by the claims themselves, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings and recited in the claims in a particular order, this by itself should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method (400) comprising:
generating (402), using a trained segmentation model and an input image (302), a mask (310) indicating regions of the input image;
comparing (404) (i) first pixels corresponding to the input image and (ii) second pixels of an image class of one or more image classes;
determining (406), using (i) the comparison and (ii) adjustments corresponding to the image class of the one or more image classes, color adjustments (314) for the first pixels corresponding to the input image; and
generating (408), using (i) the mask indicating regions of the input image and (ii) the color adjustments for the first pixels, an output image (328).

2. The method of claim **1,** comprising:
generating, using the input image (302) and a color look-up table (320), base adjustments (322),
wherein generating the output image comprises generating the output image using (i) the mask, (ii) the color adjustments for the first pixels, and (iii) the base adjustments.

3. The method of claim 2, wherein generating the output image using (i) the mask, (ii) the color adjustments for the first pixels, and (iii) the base adjustments comprises:
combining (a) the color adjustments for the first pixels and (b) the base adjustments.

4. The method of claim 2, wherein generating, using the input image and the color look-up table, the base adjustments comprises using a single color look-up table.

5. The method of claim 1:
wherein generating the output image comprises, for each pixel of the first pixels, determining a color adjustment value by multiplying color adjustments for each given pixel by a corresponding value of the mask;
and/or
comprising providing the output image for display on a screen of a device (120).

6. The method of claim 1, wherein generating the output image comprises:
generating, using (i) the mask and (ii) the color adjustments for the first pixels, one or more values representing adjustments to the input image;
adjusting, using the one or more values representing adjustments to the input image, the first pixels; and
generating the output image (328) using the adjusted first pixels.

7. The method of claim 6, wherein generating the output image using the adjusted first pixels comprises:
generating the output image using the adjusted first pixels and a first decoding process on the adjusted first pixels, wherein the first decoding process is configured to decode a prior encoding process.

8. The method of claim 7, wherein generating the output image using the first decoding process on the adjusted first pixels comprises:
converting hue, saturation, and lightness values of the adjusted first pixels to red, green, and blue values.

9. The method of claim 1, wherein generating the mask comprises:
generating, for each pixel of the input image, a value indicating whether or not the pixel represents at least a part of a defined semantic class of object; and optionally:
wherein the defined semantic class of object includes a portion of sky.

10. The method of claim 1, comprising:
generating the first pixels corresponding to the input image using a first encoding process and the input image; and optionally:
wherein the first encoding process comprises:
converting red, green, and blue values of the input image to hue, saturation, and lightness values.

11. The method of claim 1, wherein comparing (i) the first pixels and (ii) the second pixels of the image class of the one or more image classes comprises:
comparing (i) hue, saturation, and lightness values of the first pixels and (ii) hue, saturation, and lightness values of the second pixels of the image class of the one or more image classes.

12. The method of claim 1, wherein determining, using the comparison, the color adjustments for the first pixels comprises:
(a) in response to the comparison of (i) the first pixels and (ii) the second pixels of the image class of the one or more image classes satisfying a first threshold, determining the color adjustments for the first pixels to substantially match defined color adjustments for the image class of the one or more image classes; or
(b) in response to the comparison of (i) the first pixels and (ii) the second pixels of the image class of the one or more image classes satisfying a second threshold, determining the color adjustments for the first pixels as substantially dissimilar from defined color adjustments for the image class of the one or more image classes.

13. A system (100, 300) comprising one or more computers and one or more storage devices on which are stored instructions that are operable, when executed by the one or more computers, to cause the one or more computers to perform operations comprising:
generating (402), using a trained segmentation model and an input image (302), a mask (310) indicating regions of the input image;
comparing (404) (i) first pixels corresponding to the input image and (ii) second pixels of an image class of one or more image classes;
determining (406), using (i) the comparison and (ii) adjustments corresponding to the image class of the one or more image classes, color adjustments for the first pixels corresponding to the input image; and
generating (408), using (i) the mask indicating regions of the input image and (ii) the color adjustments for the first pixels, an output image (328).

14. The system of claim 13, wherein the operations comprise:
generating, using the input image and a color look-up table (320), base adjustments (322),
wherein generating the output image comprises generating the output image using (i) the mask, (ii) the color adjustments for the first pixels, and (iii) the base adjustments; and optionally:
wherein generating the output image using (i) the mask, (ii) the color adjustments for the first pixels, and (iii) the base adjustments comprises: combining (a) the color adjustments for the first pixels and (b) the base adjustments.

15. One or more computer storage media encoded with instructions that, when executed by one or more computers, cause the one or more computers to perform operations comprising:
generating (302), using a trained segmentation model and an input image, a mask indicating regions of the input image;
comparing (304) (i) first pixels corresponding to the input image and (ii) second pixels of an image class of one or more image classes;
determining (306), using (i) the comparison and (ii) adjustments corresponding to the image class of the one or more image classes, color adjustments for the first pixels corresponding to the input image; and
generating (308), using (i) the mask indicating regions of the input image and (ii) the color adjustments for the first pixels, an output image.

## Patentansprüche

1. Verfahren (400), umfassend:
Erzeugen (402) einer Maske (310), die Bereiche des Eingabebildes angibt, unter Verwendung eines trainierten Segmentierungsmodells und eines Eingabebildes (302);
Vergleichen (404) von (i) ersten Pixeln, die dem Eingabebild entsprechen, und (ii) zweiten Pixeln einer Bildklasse von einer oder mehreren Bildklassen;
Bestimmen (406) von Farbanpassungen (314) für die ersten Pixel, die dem Eingabebild entsprechen, unter Verwendung (i) des Vergleichs und (ii) von Anpassungen, die der Bildklasse der einen oder mehreren Bildklassen entsprechen; und
Erzeugen (408) eines Ausgabebildes (328) unter Verwendung (i) der Maske, die Bereiche des Eingabebildes angibt, und (ii) der Farbanpassungen für die ersten Pixel.

2. Verfahren nach Anspruch 1, umfassend:
Erzeugen von Basisanpassungen (322) unter Verwendung des Eingabebildes (302) und einer Farbnachschlagetabelle (320),
wobei Erzeugen des Ausgabebildes Erzeugen des Ausgabebildes unter Verwendung (i) der Maske, (ii) der Farbanpassungen für die ersten Pixel und (iii) der Basisanpassungen umfasst.

3. Verfahren nach Anspruch 2, wobei Erzeugen des Ausgabebildes unter Verwendung (i) der Maske, (ii) der Farbanpassungen für die ersten Pixel und (iii) der Basisanpassungen Folgendes umfasst: Kombinieren (a) der Farbanpassungen für die ersten Pixel und (b) der Basisanpassungen.

4. Verfahren nach Anspruch 2, wobei Erzeugen der Basisanpassungen unter Verwendung des Eingabebildes und der Farbnachschlagetabelle Verwenden einer einzigen Farbnachschlagetabelle umfasst.

5. Verfahren nach Anspruch 1:
wobei Erzeugen des Ausgabebildes für jedes Pixel der ersten Pixel Bestimmen eines Farbanpassungswerts durch Multiplizieren von Farbanpassungen für jedes gegebene Pixel mit einem entsprechenden Wert der Maske umfasst;
und/oder
umfassend Bereitstellen des Ausgabebildes zur Anzeige auf einem Bildschirm einer Vorrichtung (120).

6. Verfahren nach Anspruch 1, wobei Erzeugen des Ausgabebildes Folgendes umfasst:
Erzeugen von einem oder mehreren Werten, die Anpassungen des Eingabebildes darstellen, unter Verwendung (i) der Maske und (ii) der Farbanpassungen für die ersten Pixel;
Anpassen der ersten Pixel unter Verwendung des einen oder der mehreren Werte, die Anpassungen des Eingabebildes darstellen; und
Erzeugen des Ausgabebildes (328) unter Verwendung der angepassten ersten Pixel.

7. Verfahren nach Anspruch 6, wobei Erzeugen des Ausgabebildes unter Verwendung der angepassten ersten Pixel Folgendes umfasst: Erzeugen des Ausgabebildes unter Verwendung der angepassten ersten Pixel und eines ersten Dekodierungsvorgangs auf die angepassten ersten Pixel, wobei der erste Dekodierungsvorgang dazu konfiguriert ist, einen vorhergehenden Kodierungsvorgang zu dekodieren.

8. Verfahren nach Anspruch 7, wobei Erzeugen des Ausgabebildes unter Verwendung des ersten Dekodierungsvorgangs auf die angepassten ersten Pixel Folgendes umfasst:
Umwandeln der Farbton-, Sättigungs- und Helligkeitswerte der angepassten ersten Pixel in Rot-, Grün- und Blauwerte.

9. Verfahren nach Anspruch 1, wobei Erzeugen der Maske Folgendes umfasst:
Erzeugen eines Werts für jedes Pixel des Eingabebildes, der angibt, ob das Pixel mindestens einen Teil einer definierten semantischen Objektklasse darstellt oder nicht; und optional:
wobei die definierte semantische Objektklasse einen Abschnitt des Himmels beinhaltet.

10. Verfahren nach Anspruch 1, umfassend:
Erzeugen der ersten Pixel, die dem Eingabebild entsprechen, unter Verwendung eines ersten Kodierungsvorgangs und des Eingabebildes; und optional:
wobei der erste Kodierungsvorgang Folgendes umfasst:
Umwandeln der Rot-, Grün- und Blauwerte des Eingabebildes in Farbton-, Sättigungs- und Helligkeitswerte.

11. Verfahren nach Anspruch 1, wobei Vergleichen (i) der ersten Pixel und (ii) der zweiten Pixel der Bildklasse der einen oder mehreren Bildklassen Folgendes umfasst:
Vergleichen (i) der Farbton-, Sättigungs- und Helligkeitswerte der ersten Pixel und (ii) der Farbton-, Sättigungs- und Helligkeitswerte der zweiten Pixel der Bildklasse der einen oder mehreren Bildklassen.

12. Verfahren nach Anspruch 1, wobei Bestimmen der Farbanpassungen für die ersten Pixel unter Verwendung des Vergleichs Folgendes umfasst:
(a) als Reaktion auf den Vergleich (i) der ersten Pixel und (ii) der zweiten Pixel der Bildklasse der einen oder mehreren Bildklassen, die einen ersten Schwellenwert erfüllen, Bestimmen der Farbanpassungen für die ersten Pixel, so dass sie im Wesentlichen mit definierten Farbanpassungen für die Bildklasse der einen oder mehreren Bildklassen übereinstimmen; oder
(b) als Reaktion auf den Vergleich (i) der ersten Pixel und (ii) der zweiten Pixel der Bildklasse der einen oder mehreren Bildklassen, die einen zweiten Schwellenwert erfüllen, Bestimmen der Farbanpassungen für die ersten Pixel als im Wesentlichen ungleich mit definierten Farbanpassungen für die Bildklasse der einen oder mehreren Bildklassen.

13. System (100, 300), umfassend einen oder mehrere Computer und eine oder mehrere Speichervorrichtungen, auf denen Anweisungen gespeichert sind, die bei Ausführung durch den einen oder die mehreren Computer dazu betreibbar sind, den einen oder die mehreren Computer dazu zu veranlassen, Operationen durchzuführen, die Folgendes umfassen:
Erzeugen (402) einer Maske (310), die Bereiche des Eingabebildes angibt, unter Verwendung eines trainierten Segmentierungsmodells und eines Eingabebildes (302);
Vergleichen (404) von (i) ersten Pixeln, die dem Eingabebild entsprechen, und (ii) zweiten Pixeln einer Bildklasse von einer oder mehreren Bildklassen;
Bestimmen (406) von Farbanpassungen für die ersten Pixel, die dem Eingabebild entsprechen, unter Verwendung (i) des Vergleichs und (ii) von Anpassungen, die der Bildklasse der einen oder mehreren Bildklassen entsprechen; und
Erzeugen (408) eines Ausgabebildes (328) unter Verwendung (i) der Maske, die Bereiche des Eingabebildes angibt, und (ii) der Farbanpassungen für die ersten Pixel.

14. System nach Anspruch 13, wobei die Operationen Folgendes umfassen:
Erzeugen von Basisanpassungen (322) unter Verwendung des Eingabebildes und einer Farbnachschlagetabelle (320),
wobei Erzeugen des Ausgabebildes Erzeugen des Ausgabebildes unter Verwendung (i) der Maske, (ii) der Farbanpassungen für die ersten Pixel und (iii) der Basisanpassungen umfasst; und optional:
wobei Erzeugen des Ausgabebildes unter Verwendung (i) der Maske, (ii) der Farbanpassungen für die ersten Pixel und (iii) der Basisanpassungen Folgendes umfasst: Kombinieren (a) der Farbanpassungen für die ersten Pixel und (b) der Basisanpassungen.

15. Ein oder mehrere Computerspeichermedien, die mit Anweisungen codiert sind, die bei Ausführung durch einen oder mehrere Computer den einen oder die mehreren Computer dazu veranlassen, Operationen durchzuführen, die Folgendes umfassen:
Erzeugen (302) einer Maske, die Bereiche des Eingabebildes angibt, unter Verwendung eines trainierten Segmentierungsmodells und eines Eingabebildes;
Vergleichen (304) von (i) ersten Pixeln, die dem Eingabebild entsprechen, und (ii) zweiten Pixeln einer Bildklasse von einer oder mehreren Bildklassen;
Bestimmen (306) von Farbanpassungen für die ersten Pixel, die dem Eingabebild entsprechen, unter Verwendung (i) des Vergleichs und (ii) von Anpassungen, die der Bildklasse der einen oder mehreren Bildklassen entsprechen; und
Erzeugen (308) eines Ausgabebildes unter Verwendung (i) der Maske, die Bereiche des Eingabebildes angibt, und (ii) der Farbanpassungen für die ersten Pixel.

## Revendications

1. Procédé (400) comprenant :
la génération (402), à l'aide d'un modèle de segmentation entraîné et d'une image d'entrée (302), d'un masque (310) indiquant des régions de l'image d'entrée ;
la comparaison (404) (i) des premiers pixels correspondant à l'image d'entrée et (ii) des seconds pixels d'une classe d'image d'une ou de plusieurs classes d'image ;
la détermination (406), à l'aide (i) de la comparaison et (ii) d'ajustements correspondant à la classe d'image des une ou plusieurs classes d'image, des ajustements de couleur (314) pour les premiers pixels correspondant à l'image d'entrée ; et
la génération (408), à l'aide (i) du masque indiquant des régions de l'image d'entrée et (ii) des ajustements de couleur pour les premiers pixels, d'une image de sortie (328).

2. Procédé selon la revendication 1, comprenant :
la génération, à l'aide de l'image d'entrée (302) et d'une table de correspondance des couleurs (320), d'ajustements de base (322),
dans lequel la génération de l'image de sortie comprend la génération de l'image de sortie à l'aide (i) du masque, (ii) des ajustements de couleur pour les premiers pixels et (iii) des ajustements de base.

3. Procédé selon la revendication 2, dans lequel la génération de l'image de sortie à l'aide (i) du masque, (ii) des ajustements de couleur pour les premiers pixels et (iii) des ajustements de base comprend :
la combinaison (a) des ajustements de couleur pour les premiers pixels et (b) des ajustements de base.

4. Procédé selon la revendication 2, dans lequel la génération, à l'aide de l'image d'entrée et de la table de correspondance des couleurs, des ajustements de base comprend l'utilisation d'une seule table de correspondance des couleurs.

5. Procédé selon la revendication 1 :
dans lequel la génération de l'image de sortie comprend, pour chaque pixel des premiers pixels, la détermination d'une valeur d'ajustement de couleur en multipliant les ajustements de couleur pour chaque pixel donné par une valeur correspondante du masque ;
et/ou
comprenant la fourniture de l'image de sortie pour affichage sur un écran d'un dispositif (120).

6. Procédé selon la revendication 1, dans lequel la génération de l'image de sortie comprend :
la génération, à l'aide (i) du masque et (ii) des ajustements de couleur pour les premiers pixels, d'une ou de plusieurs valeurs représentant des ajustements apportés à l'image d'entrée ;
l'ajustement, à l'aide des une ou plusieurs valeurs représentant des ajustements apportés à l'image d'entrée, des premiers pixels ; et
la génération de l'image de sortie (328) à l'aide des premiers pixels ajustés.

7. Procédé selon la revendication 6, dans lequel la génération de l'image de sortie à l'aide des premiers pixels ajustés comprend :
la génération de l'image de sortie à l'aide des premiers pixels ajustés et d'un premier processus de décodage sur les premiers pixels ajustés, dans lequel le premier processus de décodage est configuré pour décoder un processus d'encodage antérieur.

8. Procédé selon la revendication 7, dans lequel la génération de l'image de sortie à l'aide du premier processus de décodage sur les premiers pixels ajustés comprend :
la conversion des valeurs de teinte, de saturation et de luminosité des premiers pixels ajustés en valeurs de rouge, de vert et de bleu.

9. Procédé selon la revendication 1, dans lequel la génération du masque comprend :
la génération, pour chaque pixel de l'image d'entrée, d'une valeur indiquant si le pixel représente ou non au moins une partie d'une classe sémantique définie d'objet ; et éventuellement :
dans lequel la classe sémantique définie d'objet comporte une portion de ciel.

10. Procédé selon la revendication 1, comprenant :
la génération des premiers pixels correspondant à l'image d'entrée à l'aide d'un premier processus d'encodage et de l'image d'entrée ; et éventuellement :
dans lequel le premier processus d'encodage comprend :
la conversion des valeurs de rouge, de vert et de bleu de l'image d'entrée en valeurs de teinte, de saturation et de luminosité.

11. Procédé selon la revendication 1, dans lequel la comparaison (i) des premiers pixels et (ii) des seconds pixels de la classe d'image des une ou plusieurs classes d'image comprend :
la comparaison (i) des valeurs de teinte, de saturation et de luminosité des premiers pixels et (ii) des valeurs de teinte, de saturation et de luminosité des seconds pixels de la classe d'image des une ou plusieurs classes d'image.

12. Procédé selon la revendication 1, dans lequel la détermination, à l'aide de la comparaison, des ajustements de couleur pour les premiers pixels comprend :
(a) en réponse à la comparaison (i) des premiers pixels et (ii) des seconds pixels de la classe d'image des une ou plusieurs classes d'image satisfaisant à un premier seuil, la détermination des ajustements de couleur pour les premiers pixels afin qu'ils correspondent sensiblement aux ajustements de couleur définis pour la classe d'image des une ou plusieurs classes d'image ; ou
(b) en réponse à la comparaison (i) des premiers pixels et (ii) des seconds pixels de la classe d'image des une ou plusieurs classes d'image satisfaisant à second seuil, la détermination des ajustements de couleur pour les premiers pixels comme étant sensiblement différents des ajustements de couleur définis pour la classe d'image des une ou plusieurs classes d'image.

13. Système (100, 300) comprenant un ou plusieurs ordinateurs et un ou plusieurs dispositifs de stockage sur lesquels sont stockées des instructions qui sont utilisables, lorsqu'elles sont exécutées par les un ou plusieurs ordinateurs, pour amener les un ou plusieurs ordinateurs à réaliser des opérations comprenant :
la génération (402), à l'aide d'un modèle de segmentation entraîné et d'une image d'entrée (302), d'un masque (310) indiquant des régions de l'image d'entrée ;
la comparaison (404) (i) des premiers pixels correspondant à l'image d'entrée et (ii) des seconds pixels d'une classe d'image d'une ou de plusieurs classes d'image ;
la détermination (406), à l'aide (i) de la comparaison et (ii) d'ajustements correspondant à la classe d'image des une ou plusieurs classes d'image, des ajustements de couleur pour les premiers pixels correspondant à l'image d'entrée ; et
la génération (408), à l'aide (i) du masque indiquant des régions de l'image d'entrée et (ii) des ajustements de couleur pour les premiers pixels, d'une image de sortie (328).

14. Système selon la revendication 13, dans lequel les opérations comprennent :
la génération, à l'aide de l'image d'entrée et d'une table de correspondance des couleurs (320), d'ajustements de base (322), dans lequel la génération de l'image de sortie comprend la génération de l'image de sortie à l'aide (i) du masque, (ii) des ajustements de couleur pour les premiers pixels et (iii) des ajustements de base ; et éventuellement :
dans lequel la génération de l'image de sortie à l'aide (i) du masque, (ii) des ajustements de couleur pour les premiers pixels, et (iii) des ajustements de base comprend : la combinaison (a) des ajustements de couleur pour les premiers pixels et (b) des ajustements de base.

15. Un ou plusieurs supports de stockage informatique sur lesquels sont codées des instructions qui, lorsqu'elles sont exécutées par un ou plusieurs ordinateurs, amènent les un ou plusieurs ordinateurs à réaliser des opérations comprenant :
la génération (302), à l'aide d'un modèle de segmentation entraîné et d'une image d'entrée, d'un masque indiquant des régions de l'image d'entrée ;
la comparaison (304) (i) des premiers pixels correspondant à l'image d'entrée et (ii) des seconds pixels d'une classe d'image d'une ou de plusieurs classes d'image ;
la détermination (306), à l'aide (i) de la comparaison et (ii) d'ajustements correspondant à la classe d'image des une ou plusieurs classes d'image, des ajustements de couleur pour les premiers pixels correspondant à l'image d'entrée ; et
la génération (308), à l'aide (i) du masque indiquant des régions de l'image d'entrée et (ii) des ajustements de couleur pour les premiers pixels, d'une image de sortie.
